Europäisches Patentamt

European Patent Office

Office européen des brevets

(11) Numéro de publication: **0 526 601 B1**

(12) **FASCICULE DE BREVET EUROPEEN**

(45) Date de publication de fascicule du brevet: **12.07.95** (51) Int. Cl.6: **B23H 7/02**

(21) Numéro de dépôt: **92903651.5**

(22) Date de dépôt: **11.02.92**

(86) Numéro de dépôt internationale :
**PCT/CH92/00027**

(87) Numéro de publication internationale :
**WO 92/14575 (03.09.92 92/23)**

(54) **DISPOSITIF ANTI-CORROSION EN USINAGE PAR ELECTRO-EROSION.**

(30) Priorité: **18.02.91 CH 494/91**

(43) Date de publication de la demande:
**10.02.93 Bulletin 93/06**

(45) Mention de la délivrance du brevet:
**12.07.95 Bulletin 95/28**

(84) Etats contractants désignés:
**CH DE FR GB IT LI NL**

(56) Documents cités:
**EP-A- 0 355 696**

**PATENT ABSTRACTS OF JAPAN vol. 10, no. 372 (M-544)(2429) 11 Décembre 1986 & JP-A-61 164723 (FANUC LTD) 25 July 1986**

(73) Titulaire: **CHARMILLES TECHNOLOGIES S.A.**
**8-10, rue du Pré-de-la-Fontaine**
**Zone industrielle de Satigny**
**CH-1217 Meyrin 1 (CH)**

(72) Inventeur: **DELPRETTI, Roger**
**10, chemin de l'Echarpine**
**CH-1214 Vernier (CH)**

(74) Mandataire: **Hugelin, Christiane**
**c/o CHARMILLES TECHNOLOGIES SA**
**Case postale 373**
**CH-1217 Meyrin 1 (CH)**

Rank Xerox (UK) Business Services
(3.10/3.09/3.3.3)

# Description

La présente invention est relative à l'usinage de pièces métalliques par électro-érosion, plus particulièrement avec une machine à fil, et concerne un dispositif pour protéger la pièce en usinage contre les phénomènes de corrosion secondaires et parasites induits par le processus d'électro-érosion lui-même.

En électro-érosion, la zone d'usinage entre pièce-électrode et outil-électrode, dans laquelle éclatent les étincelles érosives, est immergée ou arrosée par un liquide diélectrique qui est le plus souvent de l'eau.

Lorsque l'électrode-outil est à la polarité négative (cathode) et la pièce à la polarité positive (anode), et lorsque le liquide d'usinage utilisé est de l'eau (ou un liquide de conductibilité électrique comparable), comme l'eau (ou ce liquide comparable), quoique déionisée, est toujours un peu conductrice (de quelques Microsiemens/Cm à quelques dizaines de Microsiemens/Cm ; rappelons que 1 Siemens = 1/Ohm), on observe un courant parasite, dit "courant de fuite" circulant de la pièce vers l'électrode-outil et dû à la différence de potentiel établie entre ces deux électrodes. Ce phénomène est surtout marqué durant la phase dite d'attente , c'est à dire avant l'éclatement de la décharge; la tension entre les électrodes peut alors être, selon les régimes d'usinage choisis, de 80 à 200 volts selon le générateur utilisé. Ceci provoque un déplacement de matière et donc une corrosion de la pièce connue sous le nom de dissolution anodique. De plus, à cette modification de la géométrie de la pièce usinée s'ajoute une altération de sa surface et un affaiblissement de ses propriétés mécaniques.

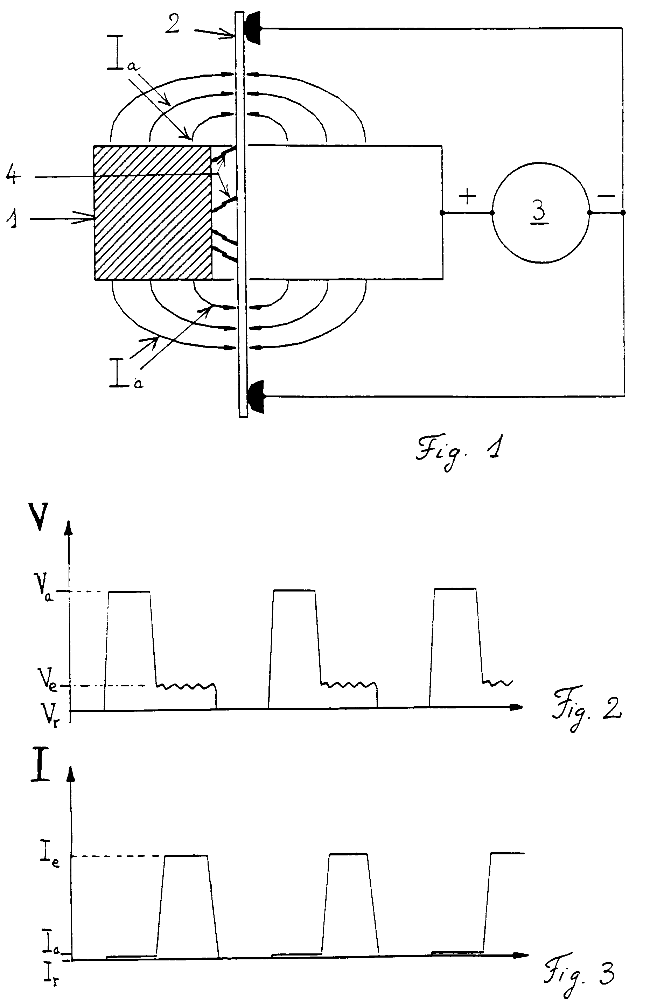

Ce phénomène est schématisé à la figure 1, qui illustre un exemple où l'électrode-outil est un fil-électrode 2 relié au pôle négatif d'un générateur 3 d'impulsions électriques. La pièce électrode 1 est reliée au pôle positif du générateur 3 et joue ainsi le rôle d'anode. Afin de rappeler quelques généralités du phénomène d'électroérosion, la variation en fonction du temps de la différence de potentiel V s'établissant dans l'espace interélectrodes et du courant électrique I circulant à travers cet espace ont été représentées sur les diagrammes des figures 2 et 3. A chaque impulsion émise par le générateur 3, la tension V monte jusqu'à une valeur Va formant un palier pendant une durée d'attente puis décroît jusqu'à une valeur moyenne Ve légèrement fluctuante. Cette décroissance correspond au passage de l'étincelle 4 de décharge entre l'électrode-outil et la pièce. Puis la tension V décroît jusqu'à une valeur nulle Vr pendant une période de repos. Le courant Ie correspond à la phase de décharge, c'est-à-dire au passage de l'étincelle 4 entre l'électrode-outil et la pièce et le courant Ir à la période de repos. Du fait de la faible conductivité du diélectrique baignant l'espace interélectrodes, un courant parasite Ia, dit courant de fuite, circule entre les électrodes. C'est ce courant de fuite Ia qui est responsable de la dissolution anodique. En effet, aux endroits de la surface de la pièce 1 les plus affectés par ce courant parasite Ia, des atomes métalliques s'ionisent. Il y a ainsi libération d'ions positifs et d'électrons libres, selon la formule

$$M \longrightarrow M^{n+} + n\,e^{-}$$

Ces ions positifs, et les électrons ainsi libérés en sens inverse alimentent et entretiennent le courant parasite Ia dans l'eau ou le liquide diélectrique comparable circulant dans la zone d'usinage. La durée des usinages se comptant en heures, voir en jours, et les pièces étant le plus souvent de l'acier, cette corrosion devient rapidement inacceptable car elle détruit la précision des parties déja usinées avant leur montage sur la machine d'électroérosion (surfaces de référence, faces rectifiées, etc...). De plus, à cette modification de la géométrie de la pièce usinée s'ajoute une altération de sa surface et un affaiblissement de ses propriétés mécaniques. L'état de surface corrodé de cette piéce est donc bien souvent incompatible avec la qualité désirée. Il faut encore préciser que le courant de fuite ne dissout pas seulement la pièce usinée mais également tous les organes de la machine soumis à l'action du diélectrique, qui sont conducteurs de l'électricité et non protégés, tels que les supports, bridages, amenées de courant, et... Des opérations de contrôle métrologique et des reprises ultérieures de rectification peuvent donc s'avérer nécessaires.

Depuis le début de l'industrialisation de l'électroérosion les constructeurs et utilisateurs de cette technique ont cherché à supprimer ou tout au moins à atténuer les effets de cette dissolution anodique.

On a ainsi proposé un générateur de décharges délivrant une tension moyenne nulle . Ceci était réalisé en n'appliquant la tension d'attente Va provoquant la dissolution anodique que pendant un court instant avant la décharge, et en la compensant ensuite immédiatement par une tension de polarité inverse. Les effets de corrosion sont ainsi notablement réduits mais ce type de générateur ne permet pas d'accroître les performances en vitesse d'usinage pour un coût minimal du générateur.

On a aussi proposé d'ajouter au diélectrique des liquides dits anticorrosion pour protéger la pièce. Mais cette solution est coûteuse et est peu praticable du fait de la nécessité et de la difficulté de contrôler et maîtriser en permanence la composition du mélange diélectrique.

On a aussi cherché à protéger les pièces à usiner par des revêtements divers, tels que graisses, huiles, vernis, etc. Ces solutions ne donnent pas de résultats satisfaisants, car la couche protectrice doit être uniforme et sans défaut. Cette méthode peut même amplifier le phénomène de corrosion dans des proportions vite inacceptables aux endroits où la couche présente un défaut, ce défaut ayant pour effet de concentrer le courant de fuite. On préfère encore une dissolution anodique relativement régulière et générale à un défaut localisé mais important.

La présente invention propose un dispositif agencé pour protéger efficacement et sans surcoût la pièce usinée contre le phénomène parasite de dissolution anodique et comporte les éléments définis à la revendication 1.

Les caractéristiques et avantages de l'invention apparaîtront à la lumière de la description qui suit et pour l'intelligence de laquelle on se référera aux dessins, dont :

- les figures 1 à 3, déjà évoquées plus haut, illustrent de façon générale le processus d'usinage par électro-érosion et le phénomène de courant parasite ;
- la figure 4 représente de façon schématique simplifiée un dispositif selon l'invention, vu de front avec demi-coupe à 90°.
- la figure 5 schématise le contre-courant électrique compensant le courant de fuite dans un mode de réalisation préféré du dispositif selon l'invention ;
- la figure 6 illustre un autre mode de réalisation apparenté à celui de la figure 5 avec adjonction d'un dispositif de régulation et de commande de l'intensité du contre-courant de compensation.

Les études sur la corrosion métallique réalisées à ce jour, telle que celle exposée par exemple dans l'ouvrage "METALLURGIE, Tome 1 de C. CHAUSSIN et G. HILLY, page 198 à 213 (Editions DUNOD)", ne tiennent compte que des problèmes liés à une corrosion naturelle du fait de la co-présence d'éléments non neutres entre eux, et proposent des protections essentiellement passives jouant sur les potentiels électrochimiques des différents matériaux en présence. La présente invention propose au contraire un dispositif actif allant directement à l'encontre de la dissolution anodique dans l'usinage par électro-érosion, qui est simple, peu couteux et n'influence pas de façon néfaste la vitesse d'usinage.

Le dispositif selon l'invention est illustré schématiquement à la figure 4. Il consiste essentiellement à greffer sur le circuit de décharge érosive conventionnel un circuit secondaire s'opposant aux effets parasites induits par le courant de fuite Ia apparaissant dans le circuit précédent . C'est en fait un dispositif de "protection cathodique" antagoniste au phénomène de dissolution anodique.

Ce circuit secondaire est composé essentiellement d'un générateur auxiliaire 5 dont le pôle négatif est relié à la pièce 1 qui devient donc cathode dans ce circuit secondaire. Le pôle positif de ce générateur 5 est relié à au moins une, de préférence au moins deux électrodes auxiliaires 6 (et voire davantage selon la complexité de la pièce 1). Le mode d'exécution illustré à la figure 4 présente deux électrodes auxiliaires , 6a et 6b. Cette ou ces électrodes auxiliaires sont immergées dans le diélectrique d'usinage ou aspergées par ce dernier de manière que toute la zone d'usinage soit baignée dans ce dernier; elles sont disposés en regard des surfaces de la pièce 1 à protéger contre la dissolution anodique, mais sans contact avec celles-ci. Le champ électrique ainsi créé entre la pièce 1 et la ou les électrodes auxiliaires 6 fonctionnant comme anodes, crée un courant I'a antagoniste au courant de fuite Ia qui atténue et peut même annuler la corrosion par dissolution anodique. La véritable dissolution anodique résultante va alors se produire sur les électrodes 6. Aussi, pour en limiter l'érosion propre, est-il avantageux de les choisir, soit dans un matériau résistant intrinsèquement à la corrosion électrochimique, par exemple l'acier inoxydable, le titane, le graphite, soit recouvert d'un revêtement protecteur tel un revêtement platiné, etc....

Le générateur auxiliaire 5 peut émettre un courant continu ou pulsé, mais ne peut évidemment être une source de courant alternatif; sa polarisation doit rester toujours du même signe.

En usinage à fil, ces électrodes 6a et 6b seront montées avantageusement sur les têtes d'usinage 7 conventionnelles servant de guidage au fil-électrode 2. Elles seront reliées à ces têtes 7 par des éléments intermédiaires 8, bien entendu isolants, et conformées pour laisser passer librement ce fil 2, ce qui évitera qu'elles soient elles-mêmes usinées de façon parasitaire en même temps que la pièce 1. Selon une autre variante, les électrodes auxilraires pourraient être reliées mécaniquement à la pièce 1, avec bien sûr interposition d'un élément isolant. Mais, dans cette variante les électrodes auxiliaires ont l'inconvénient d'être usinées en même temps que la pièce 1. Donc, bien que cette dernière variante offre une protection idéale de la pièce usinée, code il faut prévoir de nouvelles électrodes auxiliaires pour chaque nouvel usinage, elle est difficilement industrialisable.

Notons en outre que la valeur absolue du courant antagoniste I'a ne doit pas excéder celle du courant de fuite Ia dont on cherche à compenser les effets. Sinon, les ions métalliques libérés pas dissolution anodique des électrodes auxiliaires iraient se déposer sur les surfaces de la pièce 1 que l'on cherche à préserver de la corrosion et en affecteraient donc l'état de surface et la précision.

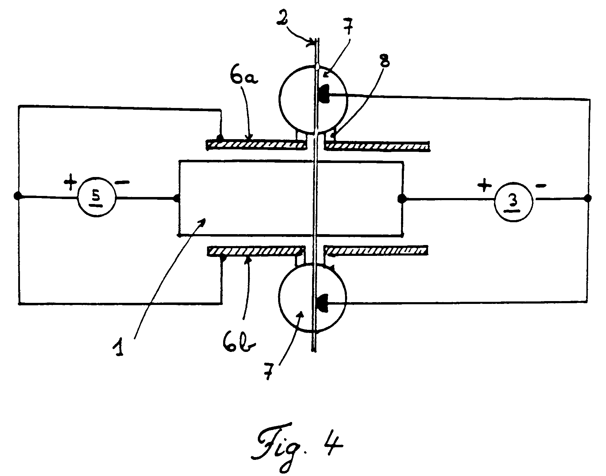

Comme déjà dit plus haut, il est avantageux que les électrodes 6 du circuit secondaire soient liées aux têtes d'usinage 7, mais elles peuvent être en outre conformées en fonction du profil de ces têtes d'usinage 7 et de la pièce 1 selon les densités locales de courant à compenser. C'est ce qui est illustré à la figure 5 qui s'apparente dans sa représentation à la figure 1 et où les électrodes auxiliaires 6 se présentent comme des boucliers à convexité tournée vers la pièce 1 et percés centralement pour le passage du fil d'usinage 2.

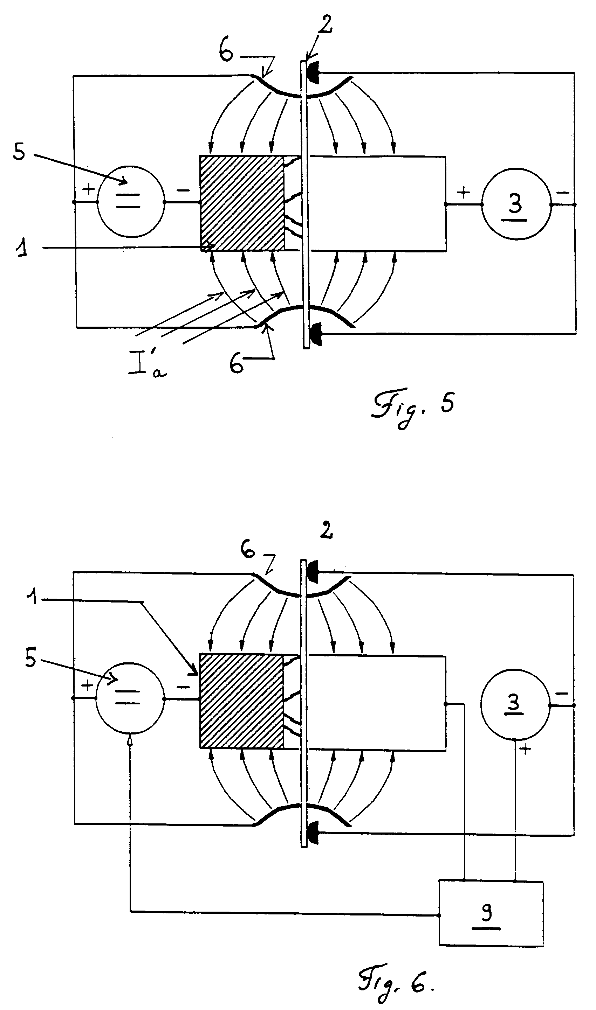

En vue d'une compensation optimale, il est avantageux d'adapter le courant de compensation au courant de fuite afin de protéger la pièce contre la corrosion due à la dissolution anodique, tout en évitant un dépot de la matière des électrodes auxiliaires sur elle. Un dispositif permettant d'éviter cette migration indésirable de matière depuis les électrodes auxiliaires vers la pièce 1 grâce à un contrôle du courant I'a de compensation en fonction de l'intensité du circuit de fuite Ia est illustré à la figure 6.

Le courant de fuite Ia peut être mesuré, soit par un organe auxiliaire, soit par un organe préexistant dans le circuit d'électroérosion principal . On peut le mesurer par exemple comme représenté à la figure 6 , grâce à un organe 9 fonctionnant durant les phases d'attente des impulsions émises par le générateur 3. Cet organe 9 peut être un ampèremètre ou un voltmètre; dans l'exemple de la figure 6 il est relié au pôle positif du générateur 3, à la pièce 1 et au générateur auxiliaire 5. Il est agencé pour délivrer un signal de commande contrôlant le fonctionnement du générateur auxiliaire 5 et donc de l'intensité du courant de compensation I'a. Le courant de fuite peut aussi être évalué à partir de certains facteurs comme la conductibilité du diélectrique et la géométrie de la pièce. On adapte alors le courant de compensation en fonction de cette évaluation.

Sans sortir du cadre de la présente invention, un dispositif selon la présente invention peut parfaitement être combiné avec des dispositifs connus, tels des capots anti-collision comme ceux du dispositif anticollision décrit dans la demande suisse No. 4 325/88 par exemple, ou des organes détecteurs de chute, après avoir été adaptés ou modifiés si nécessaire.

Ainsi, on peut intercaler, par exemple, un ampèremètre ou un voltmètre auxiliaire entre le générateur auxiliaire 5 et l'une des électrodes auxiliaires, de préférence horizontale , située sous la pièce 1 à usiner, comme l'électrode 6b illustrée à la figure 4.Si une partie de la pièce 1 est découpée par le fil-électrode de manière à être complétement séparée de cette dernière, elle tombe sur cette électrode auxiliaire ( l'électrode 6b de la figure 4); elle crée ainsi un court-circuit dans le circuit auxiliaire , signalé par l'amperemètre ou le voltmètre auxiliaire mentionné ci-dessus. Cet organe peut d'ailleurs aussi être utilisé pour déterminer l'intensité du courant I'a de compensation.

Enfin, le dispositif de la présente invention a été décrit ci-dessus surtout en relation avec l'usinage à fil. Mais il peut être utilisé avantageusement en enfonçage , à condition, bien sur, que les causes de la dissolution anodique soient réunies : pièce à usiner jouant le rôle d'anode, c'est à dire reliée au pôle positif du générateur d'impulsions, et eau (ou autre liquide diélectrique de conductivité comparable) utilisée comme diélectrique d'usinage.

## Revendications

1. Machine pour l'usinage par électro-érosion d'une pièce (1) par un fil-électrode (2) , comportant un générateur (3) d'impulsions de tension relié par son pôle négatif au fil (2) et son pôle positif à la pièce (1), caractérisée par un circuit secondaire de compensation apte à protéger la pièce (1) contre la corrosion par dissolution anodique en diminuant ou annulant cette dernière et constitué par au moins une électrode auxiliaire (6) disposée en regard de la pièce (1), par cette pièce (1) et un générateur auxiliaire (5) dont le pôle positif est relié à cette électrode (6) et le pôle négatif à la pièce (1) et agencé pour induire entre l'électrode (6) et la pièce (1) un courant (I'a) antagoniste au courant de fuite (Ia) qui circule entre la pièce (1) et le fil (2) durant la phase d'attente des impulsions émises par le générateur (3).

2. Machine selon la revendication 1, caractérisée par au moins deux électrodes (6) disposées de part et d'autre de la pièce (1).

3. Machine selon la revendication 1, caractérisée par une ou plusieurs électrodes (6) constituées d'un matériau métallique résistant à la corrosion électrochimique.

4. Machine selon la revendication 1, comportant deux têtes d'usinage (7) agencées pour guider le fil (2), caractérisée par une ou plusieurs électrodes (6) montées sur ces têtes d'usinage (7) avec interposition d'un élément isolant (8) et conformées pour laisser passer librement ce fil (2).

5. Machine selon la revendication 4, caractérisée par le fait que la ou les électrodes (6) sont associées à un ou plusieurs capots anti-collision montés sur les têtes d'usinage (7).

**6.** Machine selon la revendication 4, caractérisée par le fait que la ou les électrodes (6) sont profilées en fonction des formes respectives des têtes d'usinage (7) et de la pièce (1).

**7.** Machine selon la revendication 1, caractérisée par le fait que la ou les électrodes (6) sont mécaniquement solidaires, avec interposition d'un isolant, de la pièce (1).

**8.** Machine selon la revendication 1, caractérisée par des organes agencés pour mesurer le courant de fuite (Ia) entre la pièce (1) et le fil (2) et pour délivrer au générateur auxiliaire (5) un signal (10) approprié pour commander sa tension et donc le courant antagoniste (Ia') qu'il génère.

**9.** Machine selon la revendication 1, caractérisée par le fait que la ou les électrodes (6) sont associées à un dispositif détecteur de chutes.

## Claims

**1.** A machine for electrical-discharge machining of a workpiece (1) by a wire electrode (2), which includes a voltage pulses generator (3) whose negative pole is connected to the wire (2) and whose positive pole is connected to the workpiece (1), and characterized by a secondary equalizing circuit for protecting the workpiece (1) against the corrosion due to anodic dissolution by diminishing or eliminating the latter, and consisting of at least one auxiliary electrode (6) mounted opposite the workpiece (1), of this workpiece (1), and of an auxiliary generator (5) whose positive pole is connected to this electrode (6) and whose negative pole is connected to the workpiece (1) and that is adjusted to create, between the electrode (6) and the workpiece (1), a current (I'a) that counteracts the leakage current (Ia) circulating between the workpiece (1) and the wire (2) during the waiting times between the pulses emitted by the generator (3).

**2.** A machine according to Claim 1, characterized by at least two electrodes (6) arranged on both sides of the workpiece (1).

**3.** A machine according to Claim 1, characterized by one or several electrodes (6) made of a metallic material that resists electrochemical corrosion.

**4.** A machine according to Claim 1, which includes two machining heads (7) adjusted to guide the wire (2), characterized by one or several electrode(s) (6) mounted on these machining heads (7), with a non-conductive element (8) placed between them, and adjusted to allow free passage of the wire (2).

**5.** A machine according to in Claim 4, characterized in that the electrode(s) (6) are attached to one or several anticollision guards mounted on the machining heads (7).

**6.** A machine according to Claim 4, characterized in that the electrode(s) (6) are designed in accordance with the respective shapes of the machining heads (7) and the workpiece (1).

**7.** A machine according to Claim 1, characterized in that the electrode(s) (6) are mechanically connected to the workpiece (1), with a non-conductive element between them.

**8.** A machine according to Claim 1, characterized in that components are adjusted to measure the leakage current (1a) between the workpiece (1) and the wire (2), and to supply the auxiliary generator (5) with a signal (10) that can control its voltage and, therefore, the countercurrent (I'a) that it generates.

**9.** A machine according to Claim 1, characterized in that the electrode(s) (6) are attached to a device for detecting the fall of off-cut parts.

## Patentansprüche

**1.** Maschine zum elektroerosiven Bearbeiten eines Werkstücks (1) mit einer Drahtelektrode (2), die einen Spannungsimpulsen abgebenden Generator (3) aufweist, der durch seinen Minus-pol an den Draht (2) und seinen Plus-pol an das Werkstück (1) geschaltet ist, gekennzeichnet durch einen sekundären Kompensationsstromkreis zum Schützen des Werkstücks (1) gegen Korrosion bei anodischer Auflösung, indem er diese Korrosion vermindert oder annulliert und der aus mindestens einer, gegenüber dem Werkstück (1) angeordneten Hilfselektrode (6), aus diesem Werkstück (1) und aus einem Hilfsgenerator (5) besteht, dessen Plus-pol an diese Elektrode (6) und Minus-pol an das Werkstück (1) geschaltet ist und der so ausgebildet ist, dass er zwischen der Elektrode (6) und dem Werkstück (1) einen, gegen den Verluststrom (Ia) wirkenden Strom (I'a) abgibt, wobei dieser Verluststrom (Ia) zwischen dem Werkstück (1) und dem Draht (2), während der Wartezeit der durch den Generator (3) abgegebenen Impulse, umläuft.

2. Maschine nach Anspruch 1, gekennzeichnet durch mindestens zwei, auf beiden Seiten des Werkstücks (1) angeordnete Elektroden (6).

3. Maschine nach Anspruch 1, gekennzeichnet durch eine oder mehrere, aus einem metallischen, gegen die elektrochemische Korrosion beständigen Material bestehenden Elektroden (6).

4. Maschine nach Anspruch 1, die zwei zur Führung des Drahtes (2) ausgebildeten Arbeitsköpfe (7) aufweist, gekennzeichnet durch eine oder mehrere Elektroden (6), die auf diesen Arbeitsköpfe (7) mit Einsatz eines Isolierteils (8) montiert und so gestaltet sind, um diesen Draht (2) ungehindert durchlaufen zu lassen.

5. Maschine nach Anspruch 4, gekennzeichnet dadurch, dass die Elektrode oder die Elektroden (6) an eine oder mehrere, auf den Arbeitsköpfen (7) montierten Kollisionschutzhauben angeschlossen sind.

6. Maschine nach Anspruch 4, gekennzeichnet dadurch, dass die Elektrode oder die Elektroden (6) gemäss den jeweiligen Formen der Arbeitsköpfe (7) und des Werkstücks (1) gestaltet sind.

7. Maschine nach Anspruch 4, gekennzeichnet dadurch, dass die Elektrode oder die Elektroden (6) und das Werkstück (1), mit Einsatz eines Isolierteils, mechanisch einig sind.

8. Maschine nach Anspruch 1, gekennzeichnet durch Vorrichtungen die zum Messen des Verluststroms (Ia) zwischen dem Werkstück (1) und dem Draht (2) und zum Abgabe eines Signal (10) an dem Hilfsgenerator (5) ausgebildet sind, das zur Steuerung der Spannung des Hilfsgenerators (5) und somit des vom Hilfsgenerator (5) erzeugten Gegenstroms (I'a) geeignet ist.

9. Maschine nach Anspruch 1, dadurch gekennzeichnet, dass die Elektrode oder die Elektroden (6) an eine, fallende Werkstückteile feststellende Detektorvorrichtung angeschlossen sind.

Fig. 1

Fig. 2

Fig. 3

Fig. 4

Fig. 5

Fig. 6.